**Europäisches Patentamt**

**European Patent Office**

**Office européen des brevets**

(19)

(11) Veröffentlichungsnummer: **0 236 694**
**B1**

(12) **EUROPÄISCHE PATENTSCHRIFT**

(45) Veröffentlichungstag der Patentschrift:
28.11.90

(51) Int. Cl.⁵: $B60K 23/08$

(21) Anmeldenummer: 87100664.9

(22) Anmeldetag: 20.01.87

(54) Anordnung zur Steuerung der Kraftübertragung eines vierradangetriebenen Fahrzeuges.

(30) Priorität: 11.03.86 DE 3608059

(43) Veröffentlichungstag der Anmeldung:
16.09.87 Patentblatt 87/38

(45) Bekanntmachung des Hinweises auf die Patenterteilung:
28.11.90 Patentblatt 90/48

(84) Benannte Vertragsstaaten:
DE FR GB IT NL SE

(56) Entgegenhaltungen:
DE-A- 3 437 435
DE-A- 3 437 436
GB-A- 1 168 031
US-A- 3 411 601

PATENT ABSTRACTS OF JAPAN, Band 7,
Nr. 237 (M-250)[1382], 21. Oktober 1983; & JP - A
- 58 126 224 (FUJI JUKOGYO) 27.07.1983

(73) Patentinhaber: Dr.Ing.h.c. F. Porsche
Aktiengesellschaft, Porschestrasse 42,
D-7000 Stuttgart 40(DE)

(72) Erfinder: Schneider, Jürgen, Dr. Dipl.-Phys.,
Fichtenstrasse 9, D-7251 Weissach(DE)
Erfinder: Richter, Götz, Dr. Dipl.-Phys., Berliner Ring 21,
D-7130 Mühlacker(DE)
Erfinder: Stelter, Norbert, Dipl.-Ing., Talstrasse 17,
D-7251 Weissach(DE)

ACTORUM AG

## Beschreibung

Die Erfindung betrifft eine Anordnung zur Steuerung der Kraftübertragung eines allradangetriebenen Fahrzeugs gemäß dem Oberbegriff des Anspruchs 1 bzw. 2.

Aus der GB-A 1 168 031 ist eine Anordnung zur Steuerung der Kraftübertragung auf zwei Achsen eines allradangetriebenen Kraftfahrzeugs bekannt. Die mit Querdifferentialen versehenen Antriebsachsen werden über Drehmomentwandler, die als Längskupplungen dienen, von einer Brennkraftmaschine angetrieben. Die Drehmomentwandler sind mit Stellgliedern versehen, so daß ihre Drehmoment- oder Leistungs-Übertragungsrate kontinuierlich steuerbar ist.

Da sich die Achslasten eines Kraftfahrzeugs beim Beschleunigen ändern, weichen somit die Werte der von den Radpaaren der Achsen übertragbaren Antriebskräften von den Werten für statische Achslastverteilung bei stehendem Fahrzeug ab. Aus diesem Grund umfaßt die GB-A 1 168 031 entweder einen Lastsensor an den Drehmomentwandlern oder einen Beschleunigungsaufnehmer, der (oder die) die Drehmomentübertragungsrate der Wandler entsprechend der Last am Wandler oder der Fahrzeugbeschleunigung steuert.

Neben dem extrem hohen (insbesondere mechanischen) Aufwand – es werden unter anderem zwei dynamische Drehmomentwandler und zwei den Achsen zugeordnete Wechselgetriebe benötigt – und dessen großem Raumbedarf ist ein zusätzlicher Last- oder Beschleunigungsaufnehmer erforderlich, dessen technische Ausführung in der genannten Patentschrift nicht beschrieben ist.

Zudem ergibt sich mit der Anordnung die Schwierigkeit, daß beim Rangieren – bei dem naturgemäß nur geringfügige Beschleunigungen auftreten, die Drehmomentübertragungsrate der statischen Achslastverteilung angeglichen ist, so daß ein Antriebsstrang bei engeren Kurvenradien aufgrund der "ausgeglichenen" Drehmomentverteilung starke Verspannungen im Antriebsstrang auftreten können.

Es ist daher Aufgabe der Erfindung, eine Anordnung zur Steuerung der Kraftübertragung eines vierradgetriebenen Kraftfahrzeugs zu schaffen, die das fahrdynamische Gesamtverhalten eines derartigen Kraftfahrzeuges optimiert und mit einem geringen mechanischen bzw. sensorischen Aufwand auskommt.

Die Aufgabe wird erfindungsgemäß durch die Merkmale des Anspruchs 1 bzw. 2 gelöst. Weitere vorteilhafte Ausbildungen der Erfindung sind in den Unteransprüchen enthalten.

Die Vorteile der Erfindung sind in erster Linie darin zu sehen, daß eine Anordnung zur Steuerung der Kraftübertragung eines vierradgetriebenen Kraftfahrzeugs geschaffen ist, die das fahrdynamische Gesamtverhalten eines derartigen Kraftfahrzeugs weiter verbessert.

Durch den direkten Antrieb einer Achse über eine Brennkraftmaschinen-Getriebe-Einheit und den Abzweig von Antriebsleistung über eine kontinuierlich steuerbare Längskupplung wird ferner ein geringer, bauraumoptimierter mechanischer Aufwand erreicht. Zur Steuerung werden lediglich wenige, mit einfachen und verfügbaren Sensoren meßbare Größen benötigt. Bei Fahrzeugen, die beispielsweise bereits mit einem Antiblockierbremssystem ausgestattet sind, werden ferner keine oder wenig zusätzliche Sensoren benötigt, da nahezu alle für die Anordnung notwendigen Signalwerte von den Sensoren dieses Systems oder dem System selbst zur Verfügung gestellt werden können.

Aus einer (vom Fahrer gewünschten) Solleistung Ps und einer Fahrzeuggeschwindigkeit vf wird ein Betrag einer Sollzugkraft (Fzs) ermittelt und durch Multiplikation mit einem Verteilungsfaktor df zu einem Zugkraftanteil Fzf der Räder an der Zusatzantriebsachse zusammengesetzt, wie dies beispielsweise in der nicht vorveröffentlichten DE-A 3 437 436 beschrieben ist.

Der Verteilungsfaktor df wird über ein Kennfeld aus einem Betrag eines Zugkraftüberschusses ΔF ermittelt, der, entsprechend der ebenfalls nicht vorveröffentlichten DE-A 3 437 435, aus dem Betrag der Sollzugkraft (Fzs) und einer über eine Fahrwiderstandskennlinie aus der Fahrgeschwindigkeit nachgebildeten Fahrwiderstandkraft Fv errechnet.

Die Erfindung ist beispielhaft anhand von Zeichnungen erläutert und wird nachstehend näher beschrieben.

Es zeigt

Fig. 1 ein Schemabild einer Antriebseinheit eines Kraftfahrzeuges,

Fig. 2 ein Prinzipschaltbild eines Steuergeräts mit Eingangs- und Ausgangsgrößen,

Fig. 3 ein Blockschaltbild eines auf einem Steuergerät zur Steuerung einer Längskupplung implementierten Steuerverfahrens,

Fig. 4 ein Blockschaltbild nach Fig. 3, erweitert um eine Leistungssollwertkorrektur und einen Fahrzeugbeschleunigungsausgleich,

Fig. 5 ein Blockschaltbild eines weiteren, auf einem Steuergerät implementierten Steuerverfahrens nach der Erfindung,

Fig. 6 ein Blockschaltbild eines weiteren, auf einem Steuergerät zur Steuerung einer Längskupplung implementierten Steuerverfahrens,

Fig. 7 ein Blockschaltbild einer Kombination der Steuerverfahren nach Fig. 4 und Fig. 6 mit einer Erweiterung zur zusätzlichen Steuerung von Differentialen an einer Hauptantriebsachse und einer Zusatzantriebsachse,

Fig. 8 ein Zugkraft-Geschwindigkeits-Diagramm.

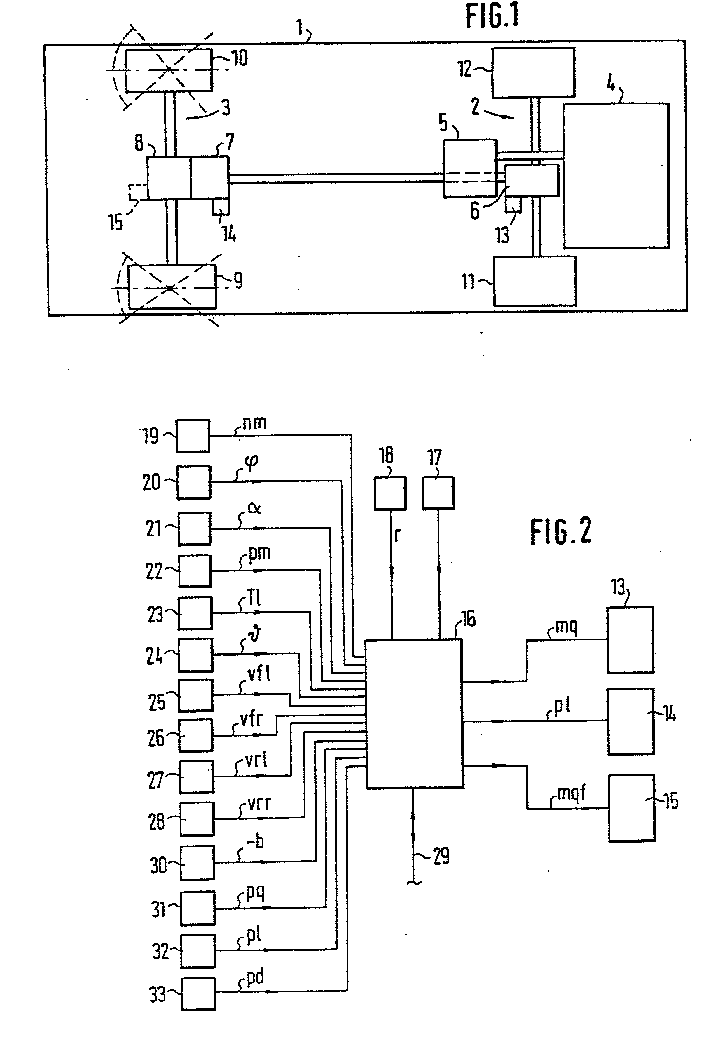

In Fig. 1 ist mit 1 ein allradangetriebenes Kraftfahrzeug mit einer Hauptantriebsachse 2 (Hinterachse) und einer Zusatzantriebsachse 3 (Vorderachse) bezeichnet; z. B. im Bereich der Hauptantriebsachse 2, hier im Heckbereich des Kraftfahrzeugs 1, ist eine Brennkraftmaschine 4 angeordnet, die über eine Kupplungs-Getriebe-Einheit 5 ein kontinuierlich in seiner Sperrwirkung steuerbares Querdifferential 6 der Hauptantriebsachse 2 und zusätzlich über eine kontinuierlich steuerbare Längskupplung 7 ein Differential 8 der Zusatzantriebsachse 3 antreibt. Dieses ist in einer einfachen Ausführung als übliches Differentialgetriebe ausgeführt; es kann aber auch ein selbstsperrendes oder kontinuierlich in seinem Sperrmoment steuerbares Differentialgetriebe sein. Räder 9, 10 an der Zusatzantriebsachse 3 sind lenkbar ausgeführt, während Räder 11, 12 der Hauptantriebsachse 2 nicht lenkbar sind. Stellglieder 13, 14 zur Betätigung von einer Sperre des Querdifferentials 6 und der Längskupplung 7 sind lediglich symbolisch eingezeichnet, ebenso ein gestrichelt eingezeichnetes Stellglied 15 einer Sperre des Differentials der Zusatzantriebsachse 3, das nur im Falle eines kontinuierlich in seinem Sperrmoment steuerbaren Differentials benötigt wird; die Stellglieder können an den Aggregaten angeflanscht, teilweise oder ganz in diese integriert oder wenigstens teilweise außerhalb dieser angeordnet und mit diesen mechanisch, hydraulisch, pneumatisch oder elektrisch verbunden sein.

Das in Fig. 2 gezeigte Steuergerät 16 mit seinen Ein- und Ausgangsgrößen stellt eine Maximalkonfiguration dar, bei der außer dem Stellglied 14 der Längskupplung 7 auch noch das Stellglied 13 des Querdifferentials 6 und das Stellglied 15 des Differentials 8 angesteuert werden. Auch von den angeschlossenen Sensoren reicht bereits eine bestimmte Anzahl für ein gutes Funktionieren der Anordnung aus.

Es ist dabei angenommen, daß die Stellglieder linear wirken und eventuell mit unterlagerten Regelkreisen versehen sind. Selbstveständlich können die Regelkreise auch im Steuergerät 16 implementiert sein. Eventuelle Rückführungen von Meßwerten sind dabei nicht gezeigt. Ohnehin sind die in den Darstellungen gezeigten Verbindungen zwischen Funktionsblöcken eher als Wirkungslinien zu sehen.

Das Steuergerät 16 ist dabei bevorzugt auf der Basis eines Mikrorechnersystems aufgebaut. Der Aufbau des Steuergeräts entspricht einer üblichen Prozeßrechnerkonfiguration mit Zentraleinheit, flüchtigen und nicht flüchtigen Speichern (RAM und ROM). Eingangs- und Ausgangsbausteinen, Zeitgebern usw.; daher wird auf den Aufbau nicht näher eingegangen.

An das Steuergerät 16 angeschlossen ist ferner ein Display 17, das im Armaturenbrettbereich des Kraftfahrzeuges angeordnet ist und einem Fahrer Information über einen augenblicklichen Zustand der Anordnung anzeigt, z. B., welche Differentialsperre zu wieviel Prozent betätigt ist und mit welchem Prozentsatz die Längskupplung das Antriebsmoment der Vorderachse zuteilt; ebenso können mögliche Fehler in der Anordnung angezeigt werden.

Eine, eine Steuergröße r abgebende Verstelleinheit 18 läßt eine gezielte Beeinflussung des Steuerverfahrens zu, die teils vom Fahrer und, teils nur von einem Servicepersonal vorgenommen werden können. Es soll dem Fahrer z. B. ermöglicht werden, bestimmte Steuerverfahren in Abhängigkeit von einem Fahrbahnzustand anzuwählen; bei einem in Schnee oder losem Untergrund festgefahrenen Fahrzeug kann es z.B. sinnvoll sein, einen starren Durchtrieb zur Zusatzantriebsachse und gegebenenfalls ein vollständiges Sperren der Differentiale einzustellen. Eine eventuelle sensorische Erfassung eines Reibwerts zwischen Rädern und einer Fahrbahn sei ebenfalls der Verstelleinheit 18 zugeordnet.

Das Wort sensorisch ist nicht unbedingt nur im eventuellen alleinigen Erfassen einer Meßgröße oder in einem Unwandeln der Meßgröße in eine andere physikalische Größe zu sehen, es kann auch ein Verarbeiten oder Vorverarbeiten einer oder mehrerer erfaßter Größen bedeuten.

Zur Berechnung einer - intern benötigten - Solleistung Ps erhält das Steuergerät 16 von einem Motordrehzahlmesser 19 ein Motordrehzahlsignal nm und entweder ein Fahrpedalsignal $\varphi$ von einem Fahrpedalgeber 20 oder ein Drosselklappenwinkelsignal $\alpha$ von einem Drosselklappenwinkelgeber 21 und im Falle einer aufgeladenen Brennkraftmaschine, von einem Ladedruckgeber 22 ein Ladedrucksignal pm und von einem Ladelufttemperaturgeber 23 ein Ladelufttemperatursignal Tl.

Eine Erfassung eines Lenkeinschlags durch einen Lenkwinkelgeber 24 ist in den Grundversionen nicht vorgesehen, da das Steuergerät auch ohne ein Lenkeinschlagsignal $\vartheta$ ein hervorragendes Fahrverhalten gewährleistet; es wird lediglich zum Erreichen einer letzten Verfeinerung benötigt und sei deshalb nur der Vollständigkeit halber erwähnt.

Von den, den Rädern 9 und 10 zugeordneten Gebern 25 und 26 sowie den, den Rädern 11 und 12 zugeordneten Gebern 27 und 28 erhält die Steuereinheit 16 Signale vfl, vfr, vrl und vrr, die den Geschwindigkeiten dieser Räder an Zusatz- und Hauptantriebsachse 3, 2 entsprechen.

Diese Signale werden auch für ein Steuergerät eines Antiblockierbremssystems (ABS) benötigt, so daß ihre Signalerfassung bei Fahrzeugen, die mit einem derartigen System ausgerüstet sind, auch gemeinsam erfolgen kann, d. h., sie werden von einem der beiden Systeme erfaßt und dem anderen zur Verfügung gestellt.

Am Steuergerät 16 ist ein externes Bussytem 29 vorgesehen, über das das Steuergerät mit anderen, im Fahrzeug zu Steuerungs-, Meß- und Informationszwecken eingesetzten Digitalrechnersystemen, beispielsweise einem Steuergerät eines ABS oder einem Motormanagementrechner (Digitale Motorelektronik), kommunizieren kann.

Dem System kann ferner ein Verzögerungssignal -b von dem Steuergerät eines ABS oder eines Bremslichtschalters 30 zugeführt werden, worauf das Steuergerät 16 bei einem Fahrzeug, das mit einem ABS ausgerüstet ist, wenigstens das Stellglied 14 der Längskupplung 7 soweit absteuert, daß das ABS einen auftretenden Bremsschlupf sicher erfassen und regelnd in die Dosierung der Bremskraft einwirken kann.

Bei Fahrzeugen ohne ABS kann es auch sinnvoll sein, die Stellglieder 13 bis 15 beim Bremsen voll anzusteuern, um ein Überbremsen einzelner Räder oder Achsen zu vermeiden.

An das Steuergerät 16 können ferner Druckgeber 31, 32 und 33 angeschlossen werden, die Signale entsprechend den Steuerdrücken pq, pl, pd am Ausgang der Stellglieder 13 bis 15 zu Regelungs-, Überwachungs- oder Anzeigezwecken abgeben.

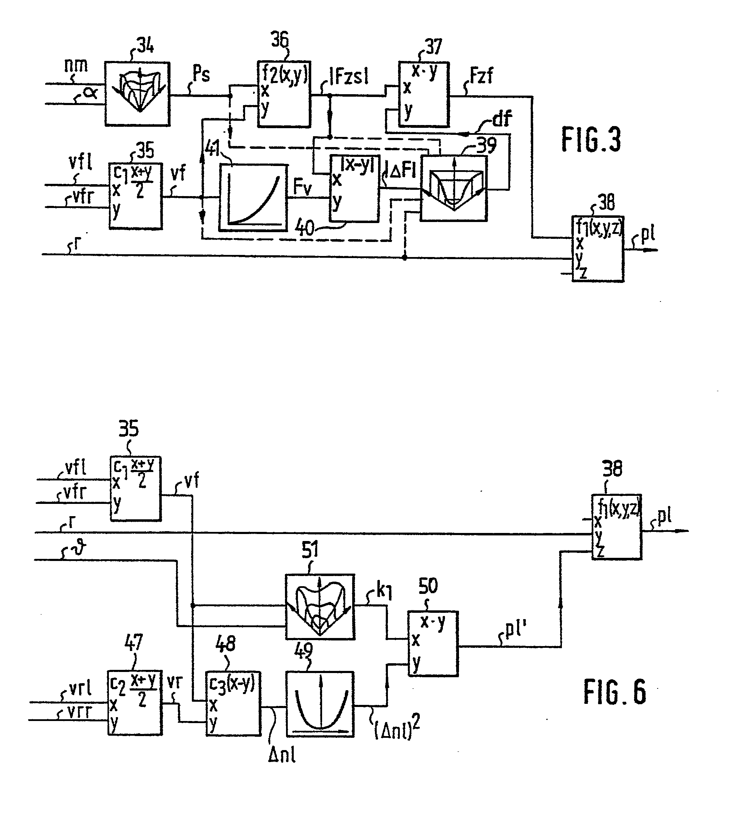

Das in Fig. 3 dargestellte Blockschaltbild zeigt ein Steuerverfahren zur Ansteuerung der Längskupplung 7 entsprechend dem Anspruch 1. Dabei wird über ein Drosselklappenwinkel-Drehzahl-Kennfeld 34 aus dem Motordrehzahlsignal nm und dem Drosselklappenwinkelsignal $\alpha$ oder dem Fahrpedalsignal $\varphi$ eine vom Fahrer vorbestimmte Solleistung Ps bei einer augenblicklichen Motordrehzahl bestimmt. Bei Motoren, die z. B. mit Turboladern ausgestattet sind, werden dem Kennfeld 34 zusätzlich ein Ladedruck- und ein Ladelufttemperatursignal pm und Tl zugeführt. Im Falle eines mit einer digitalen Motorelektronik zur Steuerung von Zündung und Einspritzung versehenen Kraftfahrzeugs, kann dieser in der Regel bereits ein Signal entsprechend dem Betrag der Solleistung |Ps| entnommen werden.

Über eine mit einer Konstanten $c_l$ gewichteten Mittelwertbildung 35 wird aus den Radgeschwindigkeitssignalen vfl und vfr eine, einer Fahrgeschwindigkeit entsprechende Geschwindigkeit vf der Räder an der Zusatzantriebsachse bestimmt. Daraus und aus der Solleistung Ps oder deren Betrag wird über einen zweiten funktionellen Zusammenhang $f_2(Ps, vf)$ 36, der weiter unten anhand eines Diagramms näher erläutert wird, ein Betrag einer Sollzugkraft |Fzs| ermittelt. Dieser wird über eine Multiplikation 37 mit einem Verteilungsfaktor df zu einer Zugkraft Fzf der Zusatzantriebsachse verknüpft, und über einen ersten funktionellen Zusammenhang $f_1(Fzf, r, pl')$ 38 in einer Steuergröße pl zur Ansteuerung des Stellglieds 14 der Längskupplung gewandelt. Der erste funktionelle Zusammenhang 38 kann noch von weiteren Größen, etwa von der Steuergröße r von der Verstelleinheit 18 angesteuert sein und/oder einem Steuerwert pl', der aber hier zu Null gesetzt sein soll und nachfolgend noch erläutert wird. Im einfachsten Fall besteht der erste funktionelle Zusammenhang $f_1(Fzf, r, pl')$ 38 in einer konstanten Übersetzung einer seiner Eingangsgrößen in die Ausgangsgröße (Steuergröße) pl, kann aber auch eine gewichtete Addition der Eingangsgrößen oder eine gewichtete Maximalwertauswahl aus ihnen sein.

Der Verteilungsfaktor df wird über ein Kennfeld 39 aus einem Betrag eines Zugkraftüberschusses |ΔF| gewonnen. Dies wird mittels Differenz- und Betragsbildung 40 aus dem Betrag der Sollzugkraft |Fzs| und einer Fahrwiderstandskraft Fv bestimmt, wobei letztere über eine Fahrwiderstandskennlinie 41 aus der Fahrzeuggeschwindigkeit vf ermittelt wird.

Der Verteilungsfaktor df kann ferner über das erste Kennfeld 39 außer aus dem Betrag des Zugkraftüberschusses |ΔF| auch aus dem Betrag der Sollzugkraft |Fzs|, aus der Solleistung Ps und der Geschwindigkeit vf, der Steuergröße r oder einer beliebigen Kombination dieser Steuergrößen bestimmt werden. Am Rande sei vermerkt, daß des Begriff "Kennfeld" als Oberbegriff für einen digitalisierten, (d. h., an Stützstellen erfaßten) in einem Speicherbereich abgelegten funktionellen Zusammenhang zu sehen ist, der im einfachsten Fall eine Konstante, weiter eine Kennlinie oder eine von einem oder mehreren Parametern veränderliche Kennlinie oder sogar ein von mehreren Kenngrößen abhängiges mehrdimensionales Kennfeld umfassen kann, wobei bei Werten zwischen den Stützstellen jeweils quantisiert oder interpoliert wird.

Zu erwähnen ist: Im Falle eines mit einem konstanten Wert df multiplizierten Betrags der Sollzugkraft |Fzs| bildet die Anordnung ein Verteilergetriebe mit einer festen Aufteilung des Antriebsmoments auf die angetriebenen Achsen nach (Simulation eines mechanischen Verteilergetriebes durch eine elektromechanische Anordnung mit einer steuerbaren Kupplung).

Wird der Verteilungsfaktor df über das erste Kennfeld 39 lediglich aus einer unabhängigen Variablen, - dem Betrag des Zugkraftüberschusses |ΔF| oder der Sollzugkraft |Fzs| - bestimmt, so erweist sich eine Kennlinie als günstig, die entweder konstant oder (linear) abfallend ist.

Bei Verwendung der Solleistung Ps und der Geschwindigkeit vf als Eingangsgrößen erweist sich ein Kennfeld als günstig, das für kleine Werte des Betrags von Ps und vf zunächst einen konstanten, einem Maximalwert dfmax, für höhere Werte von |Ps| und |vf| einen, einem abfallenden und für noch höhere Werte von |Ps| und |vf| einen, einem Minimalwert dfmin entsprechenden Wert des Verteilungsfaktors df aufweist.

Falls zusätzlich die Steuergröße r mit verarbeitet wird, kann eine Kennlinie (bzw. ein Kennfeld) des ersten Kennfeldes 39 abhängig von r in Form, Grundwert df min, Steigung oder Maximalwert df max verändert werden.

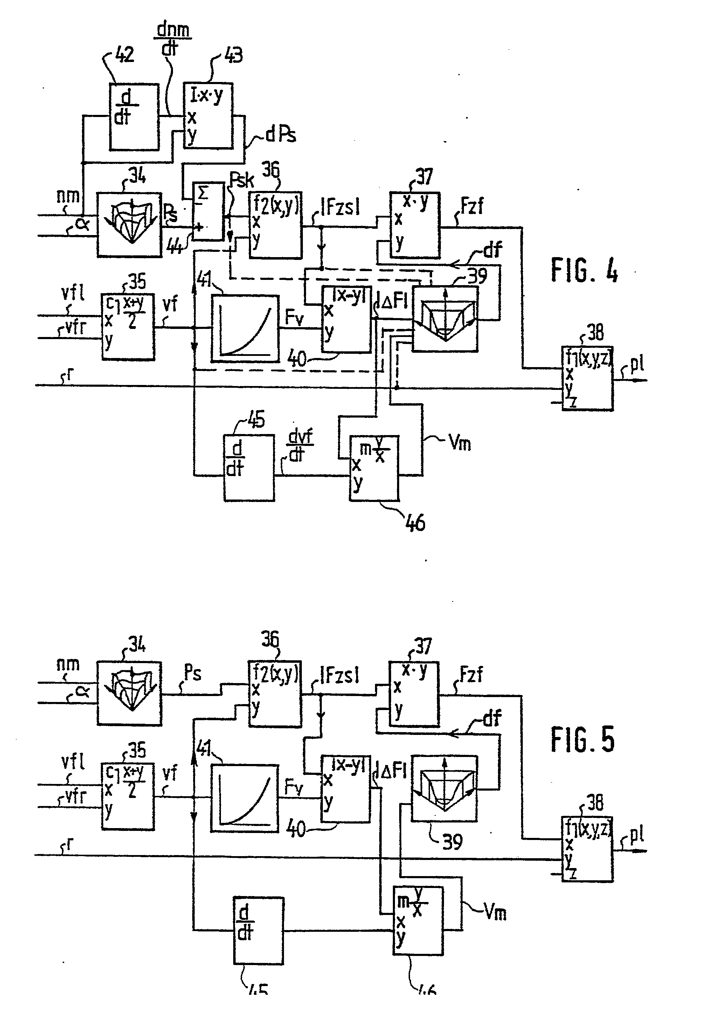

In Fig. 4 ist das Blockschaltbild nach Fig. 3 um eine Leistungssollwertkorrektur und einen Fahrzeugbeschleunigungsausgleich erweitert. Hierzu ist die Verbindung zwischen den Blöcken 34 und 36 aufgetrennt. Aus der Motordrehzahl nm wird deren zeitliche Änderung dnm/dt ermittelt, was im Block 42 in zeitdiskreter (Änderung der Motordrehzahl dnm während einer Meßzeit dt, geteilt durch diese) oder kontinuierlicher (zeitliche Differentiation, analoger Differentiator) erfolgt. Das Ausgangssignal dnm/dt wird im Multiplikator 43 mit der Motordrehzahl nm und dem Trägheitsmoment I des Antriebs des Kraftfahrzeugs 1 multpliziert, so daß in einem Summationsglied 44 das Leistungssollwertsignal Ps mit einem dynamischen Antriebsleistungsanteil dPs (Schwungmomentausgleich) zum korrigierten Leistungssollwertesignal Psk zusammengesetzt werden und dem Block 36 zugeführt werden kann.

Alternativ hierzu oder auch ergänzend kann ein Fahrzeugbeschleunigungsausgleich vorgesehen werden, welcher berücksichtigt, daß bei beschleunigendem Fahrzeug die Vorderachse ent- und die Hinterachse zusätzlich belastet wird. Hierzu wird die zeitliche Änderung der Fahrzeuggeschwindigkeit df/dt im Block 45 ermittelt, was wie bei Block 42 in analoger oder zeitdiskreter Weise erfolgen kann. In einen Divisionblock 46 wird die "reale Beschleunigung" (d. h. die zeitliche Änderung der Farzeuggeschwindigkeit (dvf/dt)) durch den mit der reziproken Fahrzeugmasse 1/m (Fahrzeugmasse entsprechend dem "Leergewicht") gewichteten Betrag des Zugkraftüberschusses |ΔF| (aus dem eine "ideale" Fahrzeugbeschleunigung resultiert) dividiert. Mit den daraus resultierenden "Massen-" Verhältnis Vm, das letztlich den Fahrzeugbeschleunigungsausgleich bewirken wird, wird zusätzlich auf das Kennfeld 39 und damit auf den Verteilungsfaktor df eingewirkt. Dieser wird hierbei um so kleiner, je höher die reale Fahrzeugbeschleunigung ist.

Eine weitere eigenständige Variante ist in Fig. 5 gezeigt. Hier wird der Verteilungsfaktor df nur noch aus dem den Fahrzeugbeschleunigungsausgleich bewirkenden Massenverhältnis Vm bestimmt, das - wie oben beschrieben - über die Blöcke 45 und 46 aus der Fahrzeuggeschwindigkeit vf und dem Betrag des Zugkraftüberschusses $|\Delta F|$ ermittelt wird, wobei sich das Kennfeld 31 zu einer Kennlinie reduziert. Auch hier wird wiederum der Verteilungsfaktor df mit wachsender realer Fahrzeugbeschleunigung reduziert, sofern es sich um ein heckgetriebenes Fahrzeug mit zuschaltbarem Vorderachsantrieb handelt. Bei Fahrzeugen mit Vorderachsantrieb und zuschaltbarem Hinterachsantrieb wird der Verteilungsfaktor df mit wachsender realer Fahrzeugsbeschleunigung vergrößert.

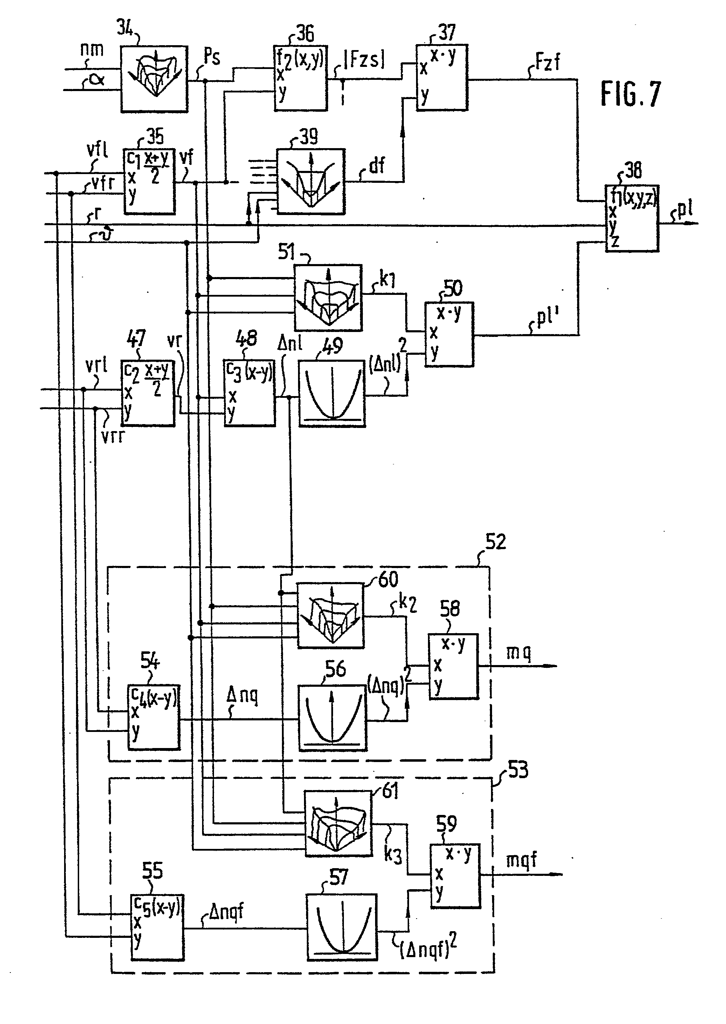

Fig. 6 zeigt ein weiteres Steuerverfahren zur Steuerung der Längskupplung 7, das jedoch sinnvoll mit dem Steuerverfahren nach Fig. 3 kombinierbar ist, wie dies in Fig. 5 noch näher erläutert wird. Die Mittelwertbildung 35 zur Gewinnung von vf und der erste funktionelle Zusammenhang 38 entsprechen den unter Fig. 3 beschriebenen Zusammenhängen, mit der Einschränkung, daß nun die Eingangsgröße Fzf des ersten funktionellen Zusammenhangs 38 zu Null gesetzt ist und dieser mit dem Steuerwert pl' beaufschlagt wird.

Über eine, mit einer Konstanten $c_2$ gewichteten Mittelwertbildung 47 wird aus den Radgeschwindigkeitssignalen vrl und vrr eine Geschwindigkeit vr der Räder an der Hauptantriebsachse 2 bestimmt. Aus einer, mit einer Konstanten $c_3$ gewichteten Differenz 48 der Geschwindigkeiten von Zusatz- und Hauptantriebsachse vf und vr resultiert eine Drehzahldifferenz $\Delta nl$ an einer Eingangs- und Ausgangswelle der Längskupplung, die durch Potenzierung, vorzugsweise Quadratbildung 49 und Multiplikation 50 mit einem Faktor $k_1$ zum Steuerwert pl' zusammengesetz wird.

Der Faktor $k_1$ kann entweder konstant gewählt werden oder über ein zweites Kennfeld 51 aus vf und/oder dem Lenkeinschlagsignal $\vartheta$ ermittelt werden.

Im Falle eines konstanten Faktors $k_1$ entspricht die Ansteuerung der Längskupplung einer Fliehkraftregelung der Drehzahldifferenz $\Delta nl$ an der Längskupplung (Kupplungsschlupf).

Wird $k_1$ allein aus der Geschwindigkeit vf bestimmt, so besteht das zweite Kennfeld aus einer Kennlinie, die mit wachsendem Betrag der Geschwindigkeit $|vf|$ ansteigt. Wird zusätzlich das Lenkeinschlagsignal $\vartheta$ mit überwacht, wird die Ausgangsgröße $k_1$ des zweiten Kennfelds bei wachsendem Betrag des Lenkeinschlags relative stark reduziert, um eine gute Lenkbarkeit des Kraftfahrzeugs zu ermöglichen.

Eine Kombination der Steuerverfahren nach den Fig. 3, 4 oder 5 und Fig. 6 bzw. ihrer Ausgangsgrößen Fzf und pl' und ihrer gemeinsamen Verarbeitung, eventuell noch mit der Steuergröße r, mittels des ersten funktionellen Zusammenhangs $f_1$(Fzf, r, pl') 38 ist in Fig. 5 dargestellt, wobei auf die erneute vollständige Darstellung der Fig. 3, 4 oder 5 verzichtet wurde; gezeichnet sind lediglich die allen gemeinsamen Blöcke 34 bis 39.

Das Steuerverfahren nach Fig. 6 stellt dabei einen "Überdrehschutz" (Begrenzung des Kupplungsschlupfs $\Delta nl$) dar und ist daher äußerst sinnvoll und in der Kombination noch wirksamer zum Erreichen eines guten Fahrverhaltens, als eines der Verfahren für sich alleine.

Als Erweiterung kann das erste Kennfeld 39 noch von einem Lenkeinschlagsignal $\vartheta$ beeinflußt werden (mit wachsendem Lenkeinschlag wird df relativ stark reduziert).

Ebenfalls gezeigt sind Funktionsblöcke 52 und 53 zur Ansteuerung eines kontinuierlich in seiner Sperrwirkung steuerbaren Querdifferentials 6 der Hauptantriebsachse 2 und eines kontinuierlich in seiner Sperrwirkung steuerbaren Differentials 8 der Zusatzantriebsachse 3.

Dabei ist der funktionelle Ablauf zur Bestimmung einer Sperrmomentsteuergröße mq zur Ansteuerung des Querdifferentials 6 und einer Sperrmomentsteuergröße mqf zur Ansteuerung des Differentials 8 weitgehend identisch mit dem zur Bestimmung des Steuerwerts pl'; allerdings erfordern die entsprechenden Kennfelder und Kenngrößen eine andere, insbesondere auch fahrzeugspezifische Anpassung.

Aus einer, mit einer Konstanten $c_4$ bzw. $c_5$ gewichteten Differenz 54 bzw. 55 der Radgeschwindigkeitssignale vrl und vrr an der Hauptantriebsachse bzw. vfl und vfr an der Zusatzantriebsachse resultiert eine Drehzahldifferenz $\Delta nq$ an den Ausgangswellen des Querdifferentials 6 bzw. $\Delta nqf$ an den Ausgangswellen des Differentials 8, die durch Potenzierung, vorzugsweise Quadratbildung 56 bzw. 57 und Multiplikation 58 bzw. 59 mit einem Faktor $k_2$ bzw. $k_3$ zu den Sperrmomentsteuergrößen mq bzw. mqf zusammengesetzt werden.

Die Faktoren $k_2$ bzw. $k_3$ können hierbei wieder konstant gewählt oder über ein drittes Kennfeld 60 bzw. ein viertes Kennfeld 61 jeweils aus der Drehzahldifferenz $\Delta nl$ an der Eingangs- bzw. an der Ausgangswelle der Längskupplung und/oder der Sollleistung Ps und/oder der Geschwindigkeit vf der Räder an der Zusatzantriebsachse und/oder dem Lenkeinschlagsignal $\vartheta$ bestimmt werden. Hierbei wird der Faktor $k_2$ bzw. $k_3$ mit wachsenden Beträgen der Drehzahldifferenz $\Delta nl$ an der Längskupplung, der Sollleistung Ps und der Geschwindigkeit vf zunehmen und mit wachsendem Betrag des Lenkeinschlags, insbesondere an der Achse mit gelenkten Rädern, relativ stark abnehmen. Das dritte Kennfeld 60 und das vierte Kennfeld 61, sowie Anzahl und Auswahl der Eingangsgrößen können dabei unterschiedlich sein.

Die Konstanten $c_1$ bis $c_5$, der erste und zweite funktionelle Zusammenhang 38 bzw. 36 und das erste bis vierte Kennfeld sind nur allgemein angegeben, da sie einer unterschiedlichen Anpassung an einen jeweiligen Fahrzeugtyp bedürfen. Hierbei liegen die Konstanten $c_1$ bis $c_5$ jeweils durch Rad-

durchmesser und Übersetzungsverhältnisse fest. Für die Auslegung der funktionellen Zusammenhänge und der Kennfelder ist die Angabe eines Beispiels dagegen wenig sinnvoll, weshalb lediglich Richtlinien angegeben werden, mit denen diese problemlos an die unterschiedlichen Fahrzeuge anpaßbar sind.

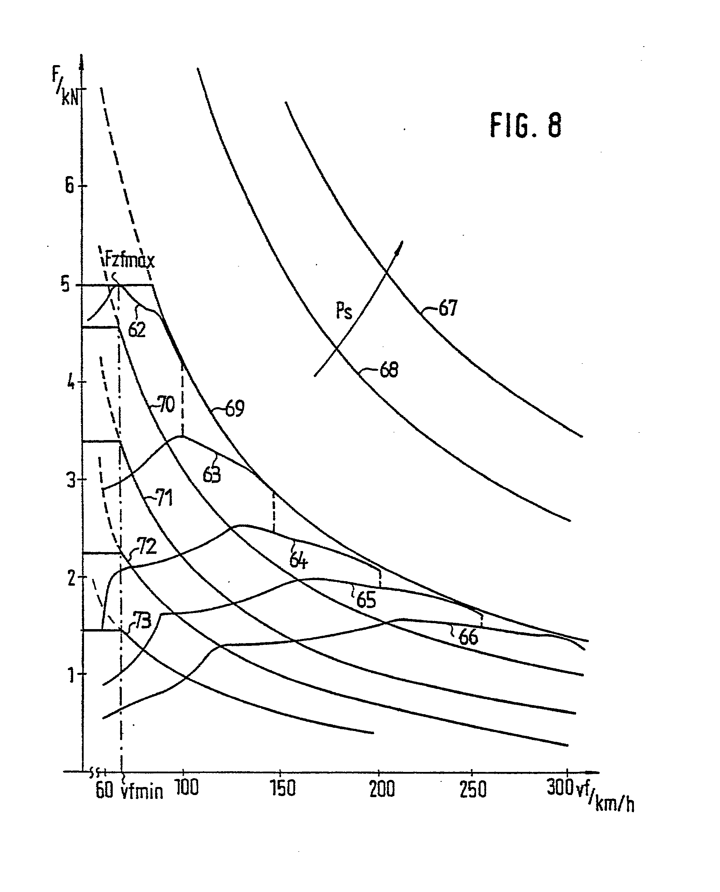

Lediglich auf den zweiten funktionellen Zusammenhang $f_2(Ps, vf)$ 36 zur Bestimmung des Betrags der Sollzugkraft |Fzs| aus der Solleistung Ps und der Geschwindigkeit vf der Räder an der Zusatzantriebsachse soll näher eingegangen und anhand eines Geschwindigkeits-Zugkraftdiagramms nach Fig. 8 erläutert werden.

Rein mathematisch gesehen errechnet sich die Sollzugkraft Fzs aus einer Division der Solleistung Ps durch die Geschwindigkeit vf. Für Geschwindigkeiten vf gegen Null geht dann aber die Sollzugkraft Fzs gegen unendlich, was aus physikalischen Gründen für eine Sollwertvorgabe nicht plausibel ist (maximale Zugkraft durch Haftreibungsgrenze zwischen Rad und Straße begrenzt). Ferner ist die sich bei vf = Null ergebende Division durch Null in der Rechenertechnik nicht erlaubt und führt im allgemeinen zu einem Programmabbruch.

In dem Geschwindigkeits-Zugkraftdiagramm sind Geschwindigkeits-Zugkraft-Kennlinien von Gangstufen 1 bis 5 (62 bis 66) einer Zusatzantriebsachse eines Fahrzeuges dargestellt, die die maximal möglichen Zugkräfte der Räder an der Zusatzantriebsachse eines Fahrzeugs in den einzelnen Gangstufen bei entsprechenden Geschwindigkeiten vf darstellen. Der höchste, überhaupt mögliche Wert der Zugkraft Fzfmax der Räder an der Zusatzantriebsachse ergibt sich bei einer Geschwindigkeit vfmin auf der Kennlinie 62 der Gangstufe 1. Ein gestrichelt gezeichneter senkrechter Übergang von einer Kennlinie auf die nächste symbolisiert einen notwendigen Schaltvorgang bei Erreichen einer Maximaldrehzahl des Motors.

Kennlinien 67 bis 73 geben eine, einer bestimmten Leistung Ps = konstant bei einer bestimmten Geschwindigkeit vf zugehörige Zugkraft an. Sie sind hyperbelförmig, da sich die Zugkraft ja aus der Division der Solleistung Ps durch die Geschwindigkeit vf ergibt; die Kennlinie 67 kann z.B. einer Zugkraft bei maximal möglicher Motorleistung entsprechen.

Die Leistungskennlinie 69 stellt eine Einhüllende der Geschwindigkeits-Zugkraft-Kennlinien 60 bis 66 dar und kann daher als maximal mögliche Zugkraft Fzfmax der Räder an der Zusatzantriebsachse gelten.

Die Berechnung der Sollzugkraft Fzs aus der Division der Sollleistung Ps durch die Geschwindigkeit vf ist aber für Beträge von Geschwindigkeiten kleiner vfmin aus oben besagten Gründen nicht mehr sinnvoll, so daß dort beser ein konstanter, lediglich von der Solleistung abhängiger Wert als Ausgangswert des zweiten funktionellen Zusammenhangs 36 ausgegeben wird, insbesondere dann, wenn der Verteilungsfaktor df lediglich aus dem Betrag der Sollzugkraft |Fzs| allein ermittelt wird. Es ist zweckmäßig, den Ausgangswert des zweiten funktionellen Zusammenhangs $f_2(Ps,vf)$ auf einen Wert Fzsmax zu beschränken, der dem höchstmöglichen Wert der Zugkraft Fzfmax der Räder an der Zusatzantriebsachse bei einem Maximalwert des Verteilungsfaktors dfmax entspricht. Diese beiden Sachverhalte äußeren sich in den abknickenden (waagerecht verlaufenden) Teilen der Kennlinien 69 bis 73 für die Zugkraft Fzf der Räder an der Zusatzantriebsachse bei Ps = konstant. Andernfalls würde am Ausgang der Multiplikation 37 ein Maximalwert der Zugkraft Fzf der Zusatzantriebsachse anstehen, der einen starren Durchtrieb zur Vorderachse erzeugen würde, womit letztendlich das Fahrzeug beim Anfahren oder Rangieren nahezu unlenkbar würde.

Selbstverständlich ist die Anordnung auch zu einer Ansteuerung eines steuerbaren Verteilergetriebes bzw. eines kontiniuierlich in seiner Sperrwirkung steuerbaren Zwischenachsdifferentials mit dem Steuerwert pl geeignet, insbesondere mittels der Anordnung nach Anspruch 2.

Der Betrag der Sollzugkraft |Fzs|, der Verteilungsfaktor df, der erste, zweite und dritte Faktor $k_1$, $k_2$ und $k_3$ sowie die Fahrwiderstandsleistung Pv werden üblicherweise aus der Fahrgeschwindigkeit ermittelt. Da allerdings an der Zusatzantriebsachse seltener Schlupf auftreten dürfte als an der Hauptantriebsachse, kann die Fahrgeschwindigkeit der Geschwindigkeit der Räder an der Zusatzantriebsachse gleichgesetzt werden. Dies schließt jedoch nicht aus, daß die Fahrgeschwindigkeit auch auf anderem Wege bestimmt werden kann, etwa durch berührungslos messende Sensoren oder durch Mittelwertbildung über die Geschwindigkeiten aller Räder. Ebenso kann der Wert im Verlauf des Rechenverfahrens auf Plausibilität überwacht und im Falle nicht plausibler Werte auch geschätzt oder korrigiert werden.

## Patentansprüche

1. Anordnung zur Steuerung der Kraftübertragung auf die Achsen (2, 3) eines allradangetriebenen Kraftfahrzeugs (1), mit einer mit einem Querdifferential (6) versehenen Hauptantriebsachse (2) und einer über eine mit einem Stellglied (14) kontinuierlich steuerbaren Längskupplung (7) angetriebenen Zusatzantriebsachse (3), wobei die Längskupplung (7) derart angesteuert wird, daß eine Antriebsleistung einer die Achsen (2, 3) antreibenden Brennkraftmaschine (4) wenigstens lastabhängig oder beschleunigungsabhängig auf die Achsen (2, 3) aufgeteilt wird, dadurch gekennzeichnet, daß vorzugsweise mit einem Mikrorechner ausgerüstetes Steuergerät (16) Eingangssignale von einem Motordrehzahlmesser (19) und einem Fahrpedalgeber (20) oder Drosselklappenwinkelgeber (21) oder Ladedruck- (22) und Ladelufttemperaturgeber (23), sowie von Gebern (25 bis 28), die Eingangssignale entsprechend den Geschwindigkeiten der Räder (9 bis 12) abgeben, erhält oder zusätzlich von einer Verstelleinheit (18) oder einem Lenkwinkelgeber (24) beeinflußt wird, und daß das Steuergerät (16) eine Steuergröße (pl) zur Ansteuerung des Stellglieds (14) der Längskupplung (7) so erzeugt, daß die Steuergröße (pl) in einer Abhängigkeit (pl = $f_1(Fzf, r, pl')$) (38) von wenigstens einer Zugkraft (Fzf) der Räder an der Zusatzantriebsachse (3) steht, wobei die Zugkraft (Fzf) der Räder an der Zusatzantriebsachse (3) aus einer multiplikativen Verknüpfung (37) eines aus einer Solleistung (Ps) und einer Fahrgeschwindigkeit (vf) bestimmten Betrags einer Sollzugkraft ( | Fzs | = f₂(Ps, vf)) (36) aller Räder mit einem Verteilungsfaktor (df) bestimmt wird, dessen Ermittlung über ein erstes Kennfeld (39) wenigstens aus dem aus der Differenz des Betrags der Sollzugkraft ( | Fzs | ) und eines über eine Fahrwiderstandskennlinie (41) aus der Fahrgeschwindigkeit (vf) abgeleiteten Fahrwiderstands (Fv) bestimmten Betrag eines Zugkraftüberschusses ( |ΔF | = | Fzs | −Fv() erfolgt.

2. Anordnung zur Steuerung der Kraftübertragung auf die Achsen (2, 3) eines allradangetriebenen Kraftfahrzeugs (1), mit einer mit einem Querdifferential (6) versehenen Hauptantriebsachse (2) und einer über eine mit einem Stellglied (14) kontinuierlich steuerbaren Längskupplung (7) angetriebenen Zusatzantriebsachse (3), wobei die Längskupplung (7) derart angesteuert wird, daß eine Antriebsleistung einer die Achsen (2, 3) antreibenden Brennkraftmaschine (4) wenigstens lastabhängig oder beschleunigungsabhängig auf die Achsen (2, 3) aufgeteilt wird, dadurch gekennzeichnet, daß ein vorzugsweise mit einem Mikrorechner ausgerüstetes Steuergerät (16) Eingangssignale von einem Motordrehzahlmesser (19) und einem Fahrpedalgeber (20) oder Drosselklappenwinkelgeber (21) oder Ladedruck- (22) und Ladelufttemperaturgeber (23), sowie von Gebern (25 bis 28), die Eingangssignale entsprechend den Geschwindigkeiten der Räder (9 bis 12) abgeben, erhält oder zusätzlich von einer Verstelleinheit (18) oder einem Lenkwinkelgeber (24) beeinflußt wird, und daß das Steuergerät (16) eine Steuergröße (pl) zur Ansteuerung des Stellglieds (14) der Längskupplung (7) so erzeugt, daß die Steuergröße (pl) in einer Abhängigkeit (pl = f₁(Fzf, r, pl')) (38) von wenigstens einer Zugkraft (Fzf) der Räder an der Zusatzantriebsachse (3) steht, wobei die Zugkraft (Fzf) der Räder an der Zusatzantriebsachse (3) aus einer multiplikativen Verknüpfung (37) eines aus einer Solleistung (Ps) und einer Fahrgeschwindigkeit (vf) bestimmten Betrags einer Sollzugkraft ( | Fzs | = f₂(Ps, vf)) (36) aller Räder mit einem Verteilungsfaktor (df) bestimmt wird, dessen Ermittlung über ein erstes Kennfeld (39) wenigstens aus der zeitlichen Änderung der Fahrgeschwindigkeit (dvf/dt) erfolgt.

3. Anordnung nach Anspruch 1 oder 2, dadurch gekennzeichnet, daß der Verteilungsfaktor (df) über das erste Kennfeld (39) zusätzlich aus dem Betrag der Sollzugkraft ( | Fzs | ) oder mittelbar oder unmittelbar aus einem der Eingangssignale des Steuergeräts (16) ermittelt wird.

4. Anordnung nach wenigstens einem der Ansprüche 1, 2 oder 3, dadurch gekennzeichnet, daß die Solleistung (Ps) um einen einen Schwungmomentausgleich eines Antriebs des Kraftfahrzeugs herbeiführenden, aus der Motordrehzahl (nm), ihrer zeitlichen Änderung (dnm/dt) (42) und dem Trägheitsmoment (I) des Antriebs errechneten dynamischen Antriebsleistungsanteil (dPs) (43) korrigiert wird (44).

5. Anordnung nach Anspruch 4, dadurch gekennzeichnet, daß die Korrektur additiv oder subtraktiv (44) erfolgt.

6. Anordnung nach Anspruch 4 oder 5, dadurch gekennzeichnet, daß die zeitliche Änderung der Motordrehzahl (dnm/dt) (42) aus einer Meßzeit (dt) und einer in dieser auftretenden Drehzahldifferenz der Motordrehzahl (dnm) ermittelt wird.

7. Anordnung nach Anspruch 4 oder 5, dadurch gekennzeichnet, daß die zeitliche Änderung der Motordrehzahl (dnm/dt) (42) durch Differentiation bestimmt wird.

8. Anordnung nach wenigstens einem der vorangehenden Ansprüche, dadurch gekennzeichnet, daß der Verteilungsfaktor (df) über das erste Kennfeld (39) lediglich oder zusätzlich über ein einen Fahrzeugbeschleunigungsausgleich herbeiführendes Verhältnis (Vm) korrigiert wird, welches durch Division (46) der zeitlichen Änderung der Fahrzeuggeschwindigkeit (dvf/dt) (45, reale Beschleunigung) durch eine aus der Fahrzeugmasse (m) und dem Zugkraftüberschuß (ΔF) bestimmte ideale Beschleunigung (F/m) ermittelt wird.

9. Anordnung nach Anspruch 8, dadurch gekennzeichnet, daß die zeitliche Änderung der Fahrzeuggeschwindigkeit (dvf/dt) (45) aus einer Meßzeit (dt) und einer in dieser auftretenden Fahrzeuggeschwindigkeitsdifferenz (dvf) ermittelt wird.

10. Anordnung nach Anspruch 8, dadurch gekennzeichnet, daß die zeitliche Änderung der Fahrzeuggeschwindigkeit (dvf/dt) (45) durch Differentiation bestimmt wird.

11. Anordnung nach Anspruch 9 oder 10, dadurch gekennzeichnet, daß das Kennfeld (39) bei wachsenden Beträgen des Zugkraftüberschusses (ΔF) und/oder der Sollzugkraft (Fzs) und/oder der Solleistung (Ps) und/oder der Fahrzeuggeschwindigkeit (vf) und/oder des Verhältnisses (Vm) wachsende zeitliche Änderung der Fahrzeuggeschwindigkeit (dvf/dt)) bei heckgetriebenen Fahrzeugen mit zuschaltbarem Vorderachsantrieb einen abfallenden und bei frontgetriebenen Fahrzeugen mit zuschaltbarem Hinterachsantrieb einen ansteigenden Verteilungsfaktor (df) bestimmt.

**Claims**

1. An arrangement for controlling the power transmission to the axles (2, 3) of an all-wheel-drive motor vehicle (1), comprising a main driving shaft (2) provided with a transverse differential (6) and an auxiliary driving shaft (3) driven by way of a longitudinal coupling (7) continuously controllable by a control element (14), the longitudinal coupling (7) being actuated in such a way that the driving output of an internal combustion engine (4) driving the axles (2, 3) is distributed to the axles (2, 3) at least in dependence upon load or acceleration, characterized in that a control device (16) preferably provided with a micro-computer receives input signals from an engine-speed counter (19) and an accelerator pedal transmitter (20) or throttle-valve angle transmitter (21) or charge-pressure transmitter (22) and charge-air-temperature transmitter (23), and from transmitters (25 to 28) which transmit input signals in accordance with the speeds of the wheels (9 to 12) or is additionally affected by an adjustment member (18) or a steering-angle transmitter (24), and the control device (16) generates a control value (pl) for actuating the control element (14) of the longitudinal coupling (7) in such a way that the control value (pl) occurs as a function (pl = f₁ (Fzf, r, pl')) (38) of at least one traction force (Fzf) of the wheels on the auxiliary driving shaft (3), the traction force (Fzf) of the wheels on the auxiliary driving shaft (3) being determined from a multiplicative combination (37) of a value – determined from a nominal output (Ps) and a travelling speed (vf) – of a nominal traction force ( | Fzs | = f₂(Ps, vf)) (36) of all the wheels with a distribution factor (df), which is determined by way of a first characteristic field (39) at least from the value of a traction force surplus ( | ΔF | = | Fzs | –Fv) determined from the difference between the value of the nominal traction force ( | Fzs | ) and a travel resistance (Fv) derived from the travelling speed (vf) by way of a travel-resistance characteristic.

2. An arrangement for controlling the power transmission to the axles (2, 3) of an all-wheel-drive motor vehicle (1), comprising a main driving shaft (2) provided with a transverse differential (6) and an auxiliary driving shaft (3) driven by way of a longitudinal coupling (7) continuously controllable by a control element (14), the longitudinal coupling (7) being actuated in such a way that the driving output of an internal combustion engine (4) driving the axles (2, 3) is distributed to the axles (2, 3) at least in dependence upon load or acceleration, characterized in that a control device (16) preferably provided with a micro-computer receives input signals from an engine-speed counter (19) and an accelerator pedal transmitter (20) or throttle-valve angle transmitter (21) or charge-pressure transmitter (22) and charge-air-temperature transmitter (23), and from transmitters (25 to 28) which transmit input signals in accordance with the speeds of the wheels (9 to 12), or is additionally affected by an adjustment member (18) or a steering-angle transmitter (24), and the control device (16) generates a control value (pl) for actuating the control element (14) of the longitudinal coupling (7) in such a way that the control value (pl) occurs as a function (pl = f₁ (Fzf, r, pl')) (38) of at least one traction force (Fzf) of the wheels on the auxiliary driving shaft (3), the traction force (Fzf) of the wheels on the auxiliary driving shaft (3) being determined from a multiplicative combination (37) of a value – determined from a nominal output (Ps) and a travelling speed (vf) – of a nominal traction force ( | Fzs | = f₂(Ps, vf) (36) of all the wheels with a distribution factor (df)), which is determined by way of a first characteristic field (39) at least from the change in time of the travelling speed (dvf/dt).

3. An arrangement according to Claim 1 or 2, characterized in that the distribution factor (df) is additionally determined by way of the first characteristic field (39) from the value of the nominal traction force ( | Fzs | ) or indirectly or directly from one of the input signals of the control device (16).

4. An arrangement according to at least one of Claims 1, 2 or 3, characterized in that the nominal output (Ps) is corrected (44) by a dynamic driving output portion (dPs) (43) causing a compensation of moment of inertia of a drive of the motor vehicle and calculated from the engine speed (nm), its change in time (dnm/dt) (42) and the moment of inertia (I) of the drive.

5. An arrangement according to Claim 4, characterized in that the correction is carried out by addition or subtraction (44).

6. An arrangement according to Claim 4 or 5, characterized in that the change in time of the engine speed (dnm/dt) is determined from a measurement time (dt) and a difference in the engine speed (dnm) occurring therein.

7. An arrangement according to Claim 4 or 5, characterized in that the change in time of the engine speed (dnm/dt) (42) is determined by differentiation.

8. An arrangement according to at least one of the preceding Claims, characterized in that the distribution factor (df) is corrected by way of the first characteristic field (39) exclusively or additionally by way of a ratio (Vm) which results in a compensation of the vehicle acceleration and which is determined by division (46) of the change in time of the vehicle speed (dvf/dt) (45, real acceleration) by an ideal acceleration (F/m) determined by the vehicle mass (m) and the traction force surplus (ΔF).

9. An arrangement according to Claim 8, characterized in that the change in time of the vehicle speed (dvf/dt) (45) is determined from a measurement time (dt) and a vehicle speed difference (dvf) occurring therein.

10. An arrangement according to Claim 8, characterized in that the change in time of the vehicle speed (dvf/dt) (45) is determined by differentiation.

11. An arrangement according to Claim 9 or 10, characterized in that, with increasing values of the traction force surplus (ΔF) and/or the nominal traction force (Fzs) and/or the nominal output (Ps) and/or the vehicle speed (vf) and/or the ratio (Vm) (increasing change in time of the vehicle speed (dvf/dt)), the characteristic field (39) determines a falling distribution factor (df) in the case of rear-drive vehicles with engageable front-axle drive and determines a rising distribution factor (df) in the case of front-drive vehicles with engageable rear-axle drive.

## Revendications

1. Dispositif pour la commande de la transmission de force aux essieux (2, 3) d'un véhicule automobile (1) à transmission intégrale, comportant un essieu moteur principal (2), pourvu d'un différentiel transversal (6), et un essieu moteur supplémentaire (3), entraîné par l'intermédiaire d'un accouplement longitudinal (7), commandé en continu par un organe de positionnement (14), l'accouplement longitudinal (7) étant commandé de manière à répartir sur les essieux (2, 3), une puissance d'entraînement d'un moteur à combustion interne (4), entraînant les essieux (2, 3), au moins en fonction de la charge ou en fonction de l'accélération, caractérisé en ce qu'un appareil de commande (16), équipé de préférence d'un micro-ordinateur, reçoit des signaux d'entrée provenant d'un tachymètre (19) et d'un capteur de pédale d'accélérateur (20) ou de capteurs angulaires de soupape d'étranglement (21) ou de capteurs de pression de charge (22) et de capteurs de température de charge (23), ainsi que de capteurs (25 à 28) qui délivrent des signaux d'entrée en fonction des vitesses des roues (9 à 12), ou est influencé, en plus, par une unité de réglage (18) ou par un capteur angulaire de direction (24) et en ce que l'appareil de commande (16) produit une grandeur de commande (pl) destinée à commander l'organe de positionnement (14) de l'accouplement longitudinal (7), de manière que la grandeur de commande (pl) soit fonction (pl = $f_1$ (Fzf, r, pl')) (38) d'au moins une force de traction (Fzf) des roues sur l'essieu moteur supplémentaire (3), la force de traction (Fzf) des roues sur l'essieu moteur supplémentaire (3) étant déterminée à partir d'une opération de multiplication (37) d'une valeur définie, à partir d'une puissance de consigne (Ps) et d'une vitesse d'avance (vf), d'une force de traction de consigne ( | Fzs | = $f_2$ (Ps, vf)) (36) de toutes les roues, par un facteur de distribution (df) dont le calcul se fait, sur un premier champ caractéristique (39), au moins à partir de la valeur d'un excédent de force de traction ( | F | = Fzs | −Fv) égal à la différence entre la valeur absolue de la force de traction de consigne ( | Fzs | ) et une résistance à l'avance (Fv), calculée à partir de la vitesse d'avance (vf), par une courbe caractéristique de résistance à l'avance (41).

2. Dispositif pour la commande de la transmission de force aux essieux (2, 3) d'un véhicule automobile (1) à transmission intégrale, comportant un essieu moteur principal (2), pourvu d'un différentiel transversal (6), et un essieu moteur supplémentaire (3), entraîné par l'intermédiaire d'un accouplement longitudinal (7), commandé en continu par un organe de positionnement (14), l'accouplement longitudinal (7) étant commandé de manière à répartir sur les essieux (2, 3), une puissance d'entraînement d'un moteur à combustion interne (4), entraînant les essieux (2, 3), au moins en fonction de la charge ou en fonction de l'accélération, caractérisé en ce qu'un appareil de commande (16), équipé de préférence d'un micro-ordinateur, reçoit des signaux d'entrée provenant d'un tachymètre (19) et d'un capteur de pédale d'accélérateur (20) ou de capteurs angulaires de soupape d'étranglement (21) ou de capteurs de pression de charge (22) et de capteurs de température de charge (23), ainsi que de capteurs (25 à 28) qui délivrent des signaux d'entrée en fonction des vitesses des roues (9 à 12), ou est influencé, en plus, par une unité de réglage (18) ou par un capteur angulaire de direction (24) et en ce que l'appareil de commande (16) produit une grandeur de commande (pl) destinée à commander l'organe de positionnement (14) de l'accouplement longitudinal (7), de manière que la grandeur de commande (pl) soit fonction (pl = $f_1$ (Fzf, r, pl')) (38) d'au moins une force de traction (Fzf) des roues sur l'essieu moteur supplémentaire (3), la force de traction (Fzf) des roues sur l'essieu moteur supplémentaire (3) étant déterminée à partir d'une opération de multiplication (37) d'une valeur absolue, définie à partir d'une puissance de consigne (Ps) et d'une vitesse d'avance (vf), d'une force de traction de consigne ( | Fzs | = $f_2$ (Ps, vf)) (36) de toutes les roues, par un facteur de distribution (df) dont le calcul se fait, sur un premier champ caractéristique (39), au moins à partir de la variation dans le temps de la vitesse d'avance (dvf/dt).

3. Dispositif selon la revendication 1 ou 2, caractérisé en ce que le facteur de distribution (df) est calculé en outre, sur le premier champ caractéristique (39), à partir de la valeur absolue de la force de traction de consigne ( | Fzs | ) ou indirectement ou directement à partir de l'un des signaux d'entrée de l'appareil de commande (16).

4. Dispositif selon au moins l'une des revendications 1, 2 ou 3, caractérisé en ce que la puissance de consigne (Ps) est corrigée (44) d'une part de la puissance d'entraînement dynamique (dPS) (43) provoquant une compensation du moment d'inertie d'un entraînement du véhicule automobile, calculée à partir de la vitesse de rotation du moteur (nm), à partir de sa variation dans le temps (dnm/dt) (42) et du moment d'inertie (I) de l'entraînement.

5. Dispositif selon la revendication 4, caractérisé en ce que la correction se fait par addition ou soustraction (44).

6. Dispositif selon la revendication 4 ou 5, caractérisé en ce que la variation dans le temps de la vitesse de rotation du moteur (dnm/dt) (42) est déterminée à partir d'un temps de mesure (dt) et d'une différence de la vitesse de rotation du moteur (dnm), se produisant pendant ce temps.

7. Dispositif selon la revendication 4 ou 5, caractérisé en ce que la variation dans le temps de la vitesse de rotation du moteur (dnm/dt) (42) est déterminée par différenciation.

8. Dispositif selon au moins l'une des revendications ci-dessus, caractérisé en ce que le facteur de distribution (df) est corrigé uniquement sur le premier champ caractéristique (39) ou, en supplément, d'un facteur (Vm) entraînant une compensation de l'accélération du véhicule, lequel facteur est déterminé en divisant (46) la variation dans le temps de la vitesse du véhicule (dvf/dt) (45, accélération réelle) par une accélération idéale (F/m), définie à partir de la masse du véhicule (m) et de l'excédent de force de traction ( F).

9. Dispositif selon la revendication 8, caractérisé en ce que la variation dans le temps de la vitesse du véhicule (dvf/dt) (45) est déterminée à partir d'un temps de mesure (dt) et d'une différence de vitesse du véhicule (dvf) se produisant pendant ce temps.

10. Dispositif selon la revendication 8, caractérisé en ce que la variation dans le temps de la vitesse du véhicule (dvf/dt) (45) est calculée par différenciation.

11. Dispositif selon la revendication 9 ou 10, caractérisé en ce que le champ caractéristique (39) détermine un facteur de distribution (df) décroissant pour les véhicules à traction arrière avec possibilité de commander l'entraînement avant et un facteur de distribution (df) croissant pour les véhicules à traction avant avec possibilité de commander l'entraînement de l'essieu arrière, lorsque les valeurs de l'excédent de force de traction (F) et/ou de la force de traction de consigne (Fzs) et/ou de la puissance de consigne (Ps) et/ou de la vitesse du véhicule (vf) et/ou du rapport (Vm) (variation croissante dans le temps de la vitesse du véhicule (dvf/dt)) augmentent.

# FIG.1

# FIG.2

FIG.3

FIG.6

FIG. 4

FIG. 5

FIG.7

EP 0 236 694 B1

FIG. 8